# EUROPEAN PATENT SPECIFICATION

(11) **EP 1 954 037 B1**
(45) Date of publication and mention of the grant of the patent: **24.04.2013**
(21) Application number: 07123301.9
(22) Date of filing: 14.12.2007
(51) Int. Cl.: H04N 21/462, H04N 21/482, H04N 21/4335, H04N 21/433, H04N 21/435, H04N 5/445, H04N 7/16

(54) **Method and apparatus for storing electronic program guide (EPG), and method and apparatus for providing EPG**
Verfahren und Vorrichtung zum Speichern einer elektronischen Programmführung und Verfahren und Vorrichtung zur Bereitstellung einer elektronischen Programmführung
Procédé et appareil de stockage de guide de programme électronique (EPG), et procédé et appareil pour fournir un EPG

(30) Priority: 05.02.2007 KR 20070011825
(43) Date of publication of application: 06.08.2008
(73) Proprietor: Samsung Electronics Co., Ltd., Suwon-si, Gyeonggi-do, 443-742 (KR)
(72) Inventor: Choi, Yun-ju, Gyeonggi-do (KR)
(74) Representative: Clark, David James

(56) References cited:
- EP-A2- 1 161 092
- EP-A2- 1 363 204
- WO-A1-03/023603
- WO-A1-03/043318
- US-A- 6 005 562
- US-A- 6 075 570
- US-A1- 2001 014 976
- US-A1- 2005 273 815
- US-B1- 6 601 074
- US-B1- 6 611 958

## Description

### BACKGROUND OF THE INVENTION

### 1. Field of the Invention

Aspects of the present invention relate to a digital television (DTV) system, and more particularly, to a method and apparatus for storing an Electronic Program Guide (EPG), and a method and apparatus for providing an EPG.

### 2. Description of the Related Art

Electronic devices such as televisions (TVs) and personal computers (PCs) require control systems that include a user interface system. Conventionally, a user interface provides information to a user, and simplifies the use of a device for which the user interface is provided. For example, an Electronic Program Guide (EPG) is a user interface that is used in a television system.

The EPG displays a list (similar to a television program list that can be used in local newspapers or other printed media) and includes information required for comparing programs with each other and decoding the programs. Conventionally, the EPG provides, to users, information regarding each program in time frames that are covered by the EPG having a range from the following one hour to several days. The information included in the EPG includes program characteristics (such as channel numbers, program titles, start times, end times, elapsed times, remaining times, themes, and summaries of program contents). The EPG can be displayed in the form of a two-dimensional table that has time information on one axis and program source information (such as channel information) on the other axis.

As digital broadcast systems have become more popular, users are able to receive hundreds of channels. Furthermore, an EPG that includes information for a broadcast can be transmitted between broadcast signals in order to provide a large amount of program information to users. Accordingly, the users can selectively watch their desired programs through the EPG.

A digital TV receives EPG information for each broadcasting station every predetermined time interval and stores the EPG information in a predetermined memory. The EPG information is used to allow a user to tune a specific channel. Furthermore, the EPG information is displayed as an EPG menu on a screen using a predetermined graphic processing block when the user searches for a plurality of program information for each hour or for each channel. As a result, the user can search for his or her desired program for each date, for each hour, for each broadcasting station, etc., through the EPG menu.

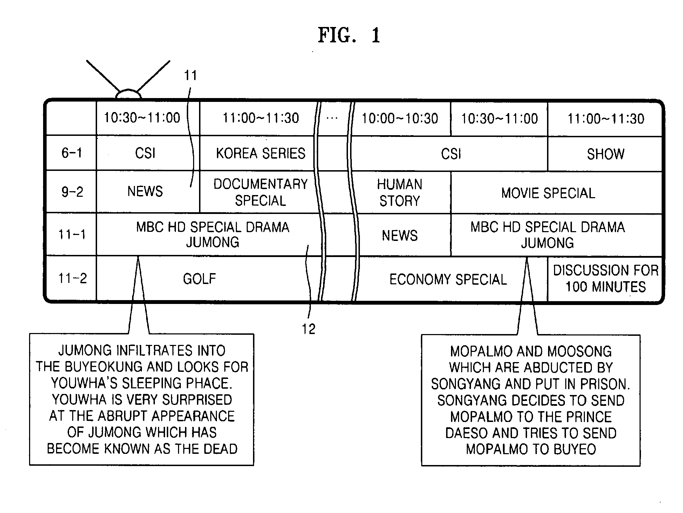

FIG. 1 illustrates a conventional EPG screen. Referring to FIG. 1, the columns of the conventional EPG screen represents broadcast times, and the rows of the conventional EPG screen represents channels. That is, the conventional EPG system shows program information according to channels and broadcast times. For example, there is News 11 from 10:30 to 11:00 on channel 9-2, and there is "Jumong" 12, which is an HD special drama of MBC, from 10:30 to 11:30 on channel 11-1,

Since the News 11 is not a series, there is little need for checking the previous episode's plot. However, since the drama "Jumong" 12 is a series, there is a greater need for checking the previous episode's plot. If a user wants to know the plot of the current episode of the drama "Jumong", he or she can search for the corresponding EPG to check this information ("Mopalmo and Moosong which are abducted by Songyang and put in prison. Songyang decides to send Mopalmo to the prince Daeso and tries to send Mopalmo to Buyeo").

However, if the user wants to know the plot of the previous episode of the drama "Jumong" 12, he or she must search for the previous EPG to check this information ("Jumong infiltrates into the Buyeokung and looks for Youwha's sleeping phace. Youwha is very surprised at the abrupt appearance of Jumong which has become known as the dead").

As such, conventionally, when a user wants to obtain previous information for a program (such as the drama "Jumong" 12), there is an inconvenience in that he or she must search for the previous EPG to find the corresponding program.

US 2001/0014976 describes television schedule information transmission and utilization systems to transmit TV schedule data and associated network control messages provided by computer as packets via the Video Blanking Interval (VBI) lines in the TV signal from various television program providers. This data is acquired by regional data processing systems and forwarded by the regional data processing systems to subscriber units and used to construct an internal database. This internal database can be accessed by the subscriber unit to display a TV schedule for the channels that are received by the user's TV.

EP 1 368 204 describes, before a programming guide is created, a unique code is assigned to each TV program that can be identified in the programming guide. Prior to the creation of the programming guide, a viewer selects the unique code corresponding to the TV show that the viewer would like to record whenever that TV show is broadcast. When the programming guide is created, the corresponding unique codes are associated with each TV program in the programming guide. The TV program corresponding to the viewer-selected unique code is then scheduled to be recorded in accordance with the announced broadcast schedule in the programming guide. A recording is made of the TV program corresponding to the viewer-selected unique code as the TV program is broadcast in accordance with the announced broadcast schedule in the programming guide.

US 6,005,562 describes a technique for transmitting and receiving an electronic program guide which identifies programs that are to be transmitted. Electronic program guide (EPG) data includes image data representing images of reduced, less than normal, size to identify respective programs which are to be transmitted. The EPG data is combined with program data, the latter representing different programs transmitted on different broadcast channels, and the combined data is transmitted. On reception, the EPG data is separated from the received program data and the images of reduced, less than normal size represented by the EPG data are displayed in superposition over the received program.

US 6,075,570 describes an electronic program guide system and an electronic program guide displaying method that allow a desired program to be selected in a short time and at a high degree of reliability. EPG data of programs received by an IRD through a satellite and EPG data of programs transmitted as a ground wave and received by a TV receiver are connected into EPG data with an integrated format by an EPG receiver. The integrated EPG data is then output and displayed to the TV receiver.

### SUMMARY OF THE INVENTION

According to the present invention there is provided a method as set forth in the appended claims. Other features of the invention will be apparent from the dependent claims, and the description which follows.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates a conventional Electronic Program Guide (EPG) screen;
FIG. 2 illustrates an index map according to EPG channels, according to an embodiment of the present invention;
FIG. 3 illustrates an EPG database according to an embodiment of the present invention;
FIG. 4 is a block diagram of an EPG storage apparatus according to an embodiment of the present invention;
FIG. 5 illustrates an EPG screen according to an embodiment of the present invention;
FIG. 6 is a flowchart of an EPG storing method according to an embodiment of the present invention;
FIG. 7 is a block diagram of an EPG providing apparatus according to an embodiment of the present invention; and
FIG. 8 is a flowchart of an EPG providing method according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

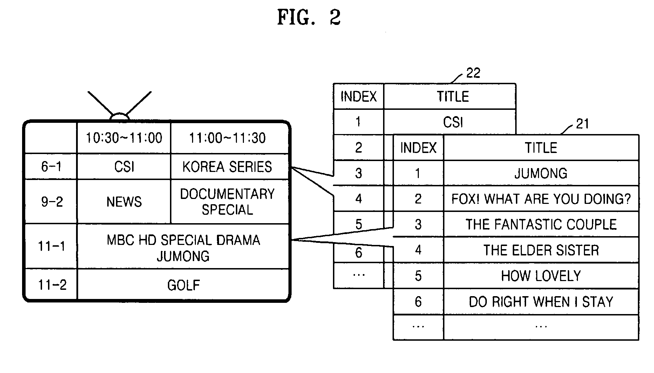

FIG. 2 illustrates an index map according to EPG channels, according to an embodiment of the present invention. Referring to FIG. 2, a first index map 21 is generated by assigning index numbers to programs broadcasting on channel 11-1 according to the programs' titles. A second index map 22 is generated by assigning index numbers to programs broadcasting on channel 6-1 according to the programs' titles. That is, if an EPG for N channels is received, N index maps are generated. Although only two index maps (i.e., the first and the second index maps 21 and 22) are illustrated in FIG. 2, aspects of the present invention are not limited thereto, and the EPG can more than two index maps corresponding to more than two channels.

Each index map includes a plurality of index numbers assigned to a plurality of programs broadcasting on the corresponding channel. In the case of the first index map 21, index numbers are respectively assigned to programs broadcasting on channel 11-1 according to the programs' titles. In detail, in the first index map 21, "Jumong" corresponds to index number 1, "Fox! What are you Doing?" corresponds to index number 2, "The Fantastic Couple" corresponds to index number 3, "The Elder Sister" corresponds to index number 4, "How Lovely" corresponds to index number 5, and "Do Right When I Stay" corresponds to index number 6.

In the case of the second index map 22, index numbers are respectively assigned to programs broadcasting on channel 6-1 according to the programs' titles. In detail, in the second index map 22, "CSI" corresponds to index number 1.

In the first and second index maps 21 and 22 illustrated in FIG. 2, the index numbers are respectively assigned to the programs, according to the programs' titles. However, aspects of the present invention are not limited thereto, and for example, the index numbers can be respectively assigned to the programs according to the programs' codes.

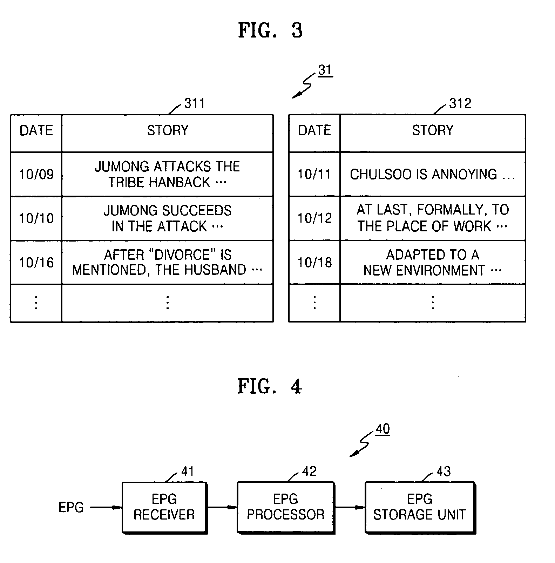

FIG. 3 illustrates an EPG database 31 according to an embodiment of the present invention. Referring to FIG. 3, the EPG database 31 stores EPG information for the channel 11-1 (see FIG. 2), and includes a first EPG database 311 and a second EPG database 312. Date information and contents corresponding to each date are stored in the first and the second databases 311 and 312. While only the first and the second EPG databases 311 and 312 are illustrated in FIG. 3, it is understood that aspects of the present invention are not limited thereto, and, for example, the EPG database 31 can include more than two EPG databases according to a plurality of index numbers.

Referring to FIGs. 2 and 3, the EPG database 31 corresponds to the first index map 21 in which index numbers are assigned to programs broadcasting on channel 11-1 according to the programs' tiles. In the first EPG database 311, information for "Jumong" corresponding to the index number 1 of the first index map 21 is stored according to dates. In the second EPG database 312, information for "Fox! What are you Doing?" corresponding to the index number 2 of the first index map 21 is also stored according to dates. For example, plot information for the drama "Jumong" broadcasted on October 9^{th}, October 10^{th}, and October 16^{th} are stored according to the dates in the first EPG database 311. Moreover, plot information for "Fox! What are you doing?" broadcasted on October 11^{th}, October 12^{th}, and October 18^{th} are stored according to the dates in the second database 312.

The first and the second index maps 21 and 22 (illustrated in FIG. 2) can be updated every deletion period of the EPG database 31. The deletion period of the EPG database 31 can be set by a user. However, aspects of the present invention are not limited thereto, and the program information stored in the EPG database 31 may updated in other ways. For example, the program information may only be deleted manually by a user, or the first and second index maps 21 and 22 may be automatically deleted when the storage capacity of the EPG database 31 becomes insufficient.

FIG. 4 is a block diagram of an EPG storage apparatus 40 according to an embodiment of the present invention. Referring to FIG. 4, the EPG storage apparatus 40 includes an EPG receiver 41, an EPG processor 42, and an EPG storage unit 43. The EPG storage apparatus 40 according to aspects of the present invention can be applied to Digital Televisions (DTVs), Internet Protocol Televisions (IPTVs), etc.

The EPG receiver 41 receives an EPG from a broadcast station. The EPG includes a channel of at least one program, the program's title, program-related information, etc. The program-related information can include summary information, a plot, preview images, etc.

The EPG processor 42 determines whether an index number corresponding to the program exists in an index map in which index numbers are assigned to programs. That is, the EPG processor 42 determines whether the program included in the EPG is included in at least one index map in which index numbers are assigned to programs according to the programs' titles (or other identifier of the program), and whether the program's title corresponds to at least one index number included in the index map. Alternatively, the EPG processor 42 determines whether the channel of the program included in the EPG is included in at least one index map in which index numbers are assigned to channels according to programs' titles (or other identifier of the program), and whether the program's title corresponds to at least one index number included in the index map.

If the program included in the EPG is included in at least one index map, and the program's title corresponds to at least one index number included in the index map, the EPG storage unit 43 stores the program-related information included in the EPG in a database assigned to the index number corresponding to the program.

Hereinafter, the operation of the EPG storage apparatus 40 will be described in detail with reference to FIGs. 2, 3, and 4. The EPG processor 42 assigns index numbers for each channel to the EPG received from the EPG receiver 41, according to the programs' titles (or other identifier of the program). The EPG processor 42 can include an index map generator (not shown) and an index generator (not shown).

The index map generator can generate a new index map when the channel of the program included in the EPG is not included in the first and the second index maps 21 and 22 (i.e., the channel of the program does not have an existing corresponding index map). The index generator can assign a new index number to the first or the second index map 21 or 22 when the program's title (or other identifier of the program) included in the EPG does not correspond to at least one index number of the first and the second index maps 21 and 22 (i.e., the program does not have an assigned index number).

For example, when information for programs entitled "Jumong" and "Fox! What are you Doing?" broadcasting on channel 11-1 exist in an EPG on October 9^{th}, the two programs entitled "Jumong" and "Fox! What are you Doing?" are included in the first index map 21 since they are broadcasted on channel 11-1. Also, index number 1 of the first index map 21 is assigned to the program entitled "Jumong" according to the program's title. Index number 2 of the first index map 21 is assigned to the program entitled "Fox! What are you Doing?" according to the program's title.

Also, when information for two programs entitled "Jumong" and "Discussion for 100 Minutes" broadcasting on channel 11-1 exist in an EPG on October 10^{th}, the EPG processor 42 first checks the first index map 21 corresponding to channel 11-1 to determine whether index numbers are assigned to the two programs.

As a result of the determination, since the program entitled "Jumong" corresponds to the index number 1 of the first index map 21, no new index number is assigned to the program entitled "Jumong." The information for the program "Jumong" broadcasting on October 10^{th} is stored in an EPG database which is assigned to the index number 1 of the first index map 21 (i.e., in the first EPG database 311).

However, since the program entitled "Discussion for 100 Minutes" does not correspond to an index number of the first index map 21, a new index number is assigned to the program entitled "Discussion for 100 Minutes." The information for the program "Discussion for 100 Minutes" broadcasting on October 10^{th} is stored in an EPG database that is assigned to a corresponding index number, as indicated in the first index map 21.

It is understood that aspects of the present invention are not limited thereto, and the EPG processor 42 can assign index numbers to programs according to, for example, the programs' codes.

As such, since program information (such as program summary information or preview images) is stored in an EPG database, a user can search for a program for each channel or for each date, or can successively check all information together. Also, the user can view information on previous programs in the format of text or images by using program summary information or preview images. However, aspects of the present invention are not limited thereto, and the EPG database 31 can, for example, further include a genre-based storage unit.

That is, if the received EPG includes information on a program genre, the user can selectively store only program information corresponding to a desired genre. For example, a case where the user requires information of a previous program occurs frequently when the user watches a series program. Because most series programs are dramas, the user can set the EPG storage apparatus 40 so that only program information corresponding to a drama genre is stored in the EPG database 31.

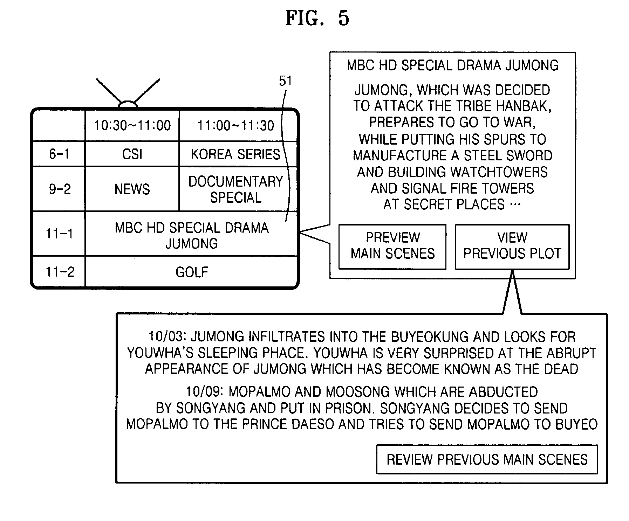

FIG. 5 illustrates an EPG screen according to an embodiment of the present invention. Referring to FIG. 5, time information is displayed at the horizontal axis of the EPG screen, and channel information is displayed at the vertical axis of the EPG screen so that a user can check program information according to times and channels. For example, if the user selects an HD special drama "Jumong" 51 of MBC broadcasting on channel 11-1 from 10:30 to 11:30, the user can check program information (such as the previous plot or main scenes) of the drama "Jumong" 51.

The program information is stored in an EPG database, according to index numbers, for each channel, as illustrated in FIG. 3. The program information may include the main scenes, plot, etc. of the corresponding program. Accordingly, by using the main scenes, plots, etc., of programs stored in an EPG database, the user can check information on previous episodes of the user's desired program.

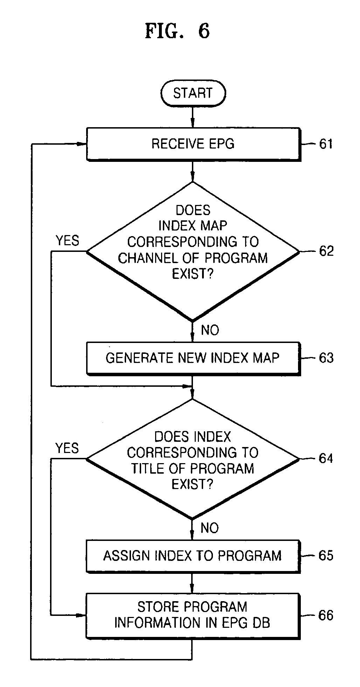

FIG. 6 is a flowchart of an EPG storing method according to an embodiment of the present invention. Referring to FIG. 6, first, an EPG including program information for at least one program is received from a broadcast station in operation 61. The program information may include the program's channel, the program's title, the program's main scenes, the program's plot, etc.

Then, it is determined whether an index map corresponding to the program's channel exists in operation 62. As described with reference to FIG. 2 above, an index map is generated for each channel, and includes a plurality of index numbers that are classified according to programs' titles (or other program identifiers).

If no index map corresponding to the program's channel exists (operation 62), a new index map corresponding to the program's channel is generated in operation 63.

If an index map corresponding to the program's channel exists (operation 62), it is determined whether the program's title (or other program identifier) corresponds to one of a plurality of index numbers included in the index map in operation 64.

If the program's title does not correspond to one of the index numbers included in the index map (operation 64), a new index number is assigned to the program in operation 65.

Then, the information for the program is stored in an EPG database assigned to the corresponding index number in operation 66.

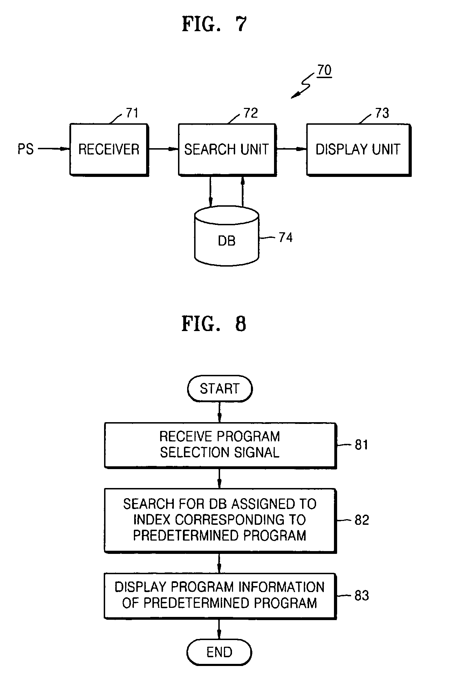

FIG. 7 is a block diagram of an EPG providing apparatus 70 according to an embodiment of the present invention. Referring to FIG. 7, the EPG providing apparatus includes a receiver 71, a search unit 72, and a display unit 73.

The receiver 71 receives a program selection signal (PS) indicating a program selected by a user. For example, the user can input the PS to the EPG providing apparatus 70 through a remote controller.

The search unit 72 searches for a database 74 assigned to an index number corresponding to the program, with reference to an index map in which index numbers are assigned to programs. The index map can be generated by assigning index numbers to programs according to programs' titles (or other program identifiers) for each channel. The database 74 can be generated by assigning program information for at least one program included in an EPG to an index number corresponding to the program.

The display unit 73 displays the program information of the program stored in the database. The program information may include the program's channel, the program's title, the program's summary information, the program's preview images, etc. For example, the display unit 73 may be a DTV or IPTV.

Through the EPG providing apparatus 70, the user can select a drama "Jumong" broadcasting on channel 11-1 from 10:30 to 11:30 and check program information, such as the previous episode's plot or main scenes of the drama "Jumong."

FIG. 8 is a flowchart of an EPG providing method according to an embodiment of the present invention. Referring to FIG. 8, first, a program selection signal indicating a predetermined program is received in operation 81.

Then, a database assigned to an index number corresponding to the predetermined program is searched for in operation 82. The database is searched for with reference to an index map in which index numbers are assigned to programs. The index map is generated by assigning index numbers to programs according to the programs' titles (or other program identifiers) for each channel. The database can be generated by assigning program information for at least one program included in an EPG to an index number corresponding to the program.

Then, the program information of the predetermined program stored in the database is displayed in operation 83. The program information may include the program's channel, the program's title, the program's summary information, and the program's preview images.

Aspects of the present invention can also be embodied as computer-readable codes on a computer-readable recording medium. The computer-readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and a computer data signal embodied in a carrier wave comprising a compression source code segment comprising the code and an encryption source code segment comprising the code (such as data transmission through the Internet). The computer-readable recording medium can also be distributed over network-coupled computer systems so that the computer-readable code is stored and executed in a distributed fashion.

As described above, in an EPG storing method and apparatus and an EPG providing method and apparatus according to aspects of the present invention, a user can easily obtain previous episode information for the user's desired program from a device that the user watches, without using other devices such as the Internet.

Furthermore, when the user wants to once more watch the previous episode although the watching of the previous episode is charged, by storing a plot and preview images transmitted from a broadcast station and using them as a summary of the previous program, the user's fee load can be reduced.

Although a few preferred embodiments have been shown and described, it will be appreciated by those skilled in the art that various changes and modifications might be made without departing from the scope of the invention, as defined in the appended claims.

## Claims

1. A method of storing and displaying an Electronic Program Guide (EPG), the method comprising:
(a) receiving an EPG including program information for at least one program;
(b) storing the program information into one of at least one database (311, 312) comprised in an EPG database (31) and assigned respectively to an index number (1,2), wherein said index number (1,2) is assigned respectively to a title or a code of said at least one program, and wherein said index number is comprised in an index map (21) which is assigned respectively to a broadcast channel;
(c) receiving a subsequent EPG including further program information for a subsequent broadcast of said at least one program and additionally storing the further program information included therein according to step (b);
(d) receiving a program selection signal to select a program to be watched;
(e) searching for program information of the selected program in the corresponding one of at least one database by using the respective index number (1,2) assigned to a title or a code of the selected program; and
(f) displaying the program information of the selected program based on the searching result, including displaying summary information for a previously broadcasted episode of the selected program retrieved from the corresponding one of at least one database, wherein the program information comprises the broadcast channel, the title and the summary information of the program; and
wherein the storing according to step (b) is conditional on program genre and comprises:
determining whether the at least one program belongs to a predetermined genre; and
storing the program information in the one of at least one database (311, 312) only if the at least one program belongs to the predetermined genre.

2. The method as claimed in claim 1, wherein the storing of the program information included in the EPG further comprises:
determining whether an index number (1,2) corresponding to the at least one program exists in the index map (21); and
generating a new index number corresponding to the at least one program and storing the new index number in the index map (21) if the index number (1,2) corresponding to the at least one program does not exist in the index map (21).

3. The method as claimed in claim 1 or 2, wherein the index map (21) is generated by assigning a first index number to a first program and a second index number to a second program.

4. The method as claimed in claim 3, wherein the index map (21) corresponds to only one channel.

5. The method as claimed in claim 3, wherein the first index number (1,2) is assigned to the first program according to a title or identifying code of the first program, and the second index number (1,2) is assigned to the second program according to a title or identifying code of the second program.

6. The method as claimed in any preceding claim, wherein the storing of the program information with reference to an index map (21) comprises:
determining whether an index map (21) corresponding to a channel on which the at least one program is broadcasted, exists; and
generating a new index map corresponding to the channel of the at least one program if the index map (21) corresponding to the broadcast channel of the at least one program does not exist.

7. The method as claimed in any preceding claim, wherein:
the program information comprises a broadcast date and time, a title, and summary information of the at least one program; and
the storing of the program information comprises storing the broadcast date and time, the title, and the summary information of the at least one program in the database assigned to the index number (1,2).

8. The method as claimed in any preceding claim, wherein the index map (21) is updated every deletion period of the EPG database (31) or at least a portion of the index map (21) is automatically deleted when a storage capacity of a unit storing the EPG database (31) becomes insufficient.

9. The method as claimed in claim 8, wherein the deletion period of the database is set by a user.

10. The method as claimed in claim 1, wherein the program information comprises preview images of the program.

11. The method as claimed in claim 1, wherein the displaying of the program information of the selected program comprises displaying preview images for a previously broadcasted episode of the selected program.

12. A computer-readable recording medium having recorded thereon a computer program for executing a method of storing and displaying an Electronic Program Guide (EPG) according to the method of claim 1.

## Patentansprüche

1. Verfahren zum Speichern und Anzeigen eines Elektronischen Programmführers (EPF), wobei das Verfahren Folgendes umfasst:
(a) Empfangen eines EPF, der Programminformationen für mindestens ein Programm enthält;
(b) Speichern der Programminformationen in einer von mindestens einer Datenbank (311, 312), die in einer EPF-Datenbank (31) enthalten ist und jeweils einer Indexnummer (1, 2) zugeordnet ist, wobei die Indexnummer (1, 2) jeweils einem Titel oder einem Code des mindestens einen Programms zugeordnet ist, und wobei die Indexnummer in einer Indexkarte (21) enthalten ist, die jeweils einem Rundfunkkanal zugeordnet ist;
(c) Empfangen eines anschließenden EPF, der weitere Programminformationen für eine anschließende Ausstrahlung des mindestens einen Programms enthält, und zusätzliches Speichern der darin enthaltenen weiteren Programminformationen gemäß Schritt (b);
(d) Empfangen eines Programmauswahlsignals zum Auswählen eines zu schauenden Programms;
(e) Suchen nach Programminformationen des ausgewählten Programms in der entsprechenden von mindestens einer Datenbank anhand der jeweiligen Indexnummer (1, 2), die einem Titel oder einem Code des ausgewählten Programms zugeordnet ist; und
(f) Anzeigen der Programminformationen des ausgewählten Programms auf der Grundlage des Suchergebnisses, einschließlich des Anzeigens von Zusammenfassungsinformationen für eine zuvor ausgestrahlte Episode des ausgewählten Programms, die aus der entsprechenden von mindestens einer Datenbank abgerufen wurden,
wobei die Programminformationen den Rundfunkkanal, den Titel und die Zusammenfassungsinformationen des Programms umfassen; und
wobei das Speichern gemäß Schritt (b) vom Programmgenre abhängig ist und Folgendes umfasst:
Feststellen, ob das mindestens eine Programm zu einem zuvor festgelegten Genre gehört; und
Speichern der Programminformationen in der einen von mindestens einer Datenbank (311, 312) nur dann, wenn das mindestens eine Programm zu dem zuvor festgelegten Genre gehört.

2. Verfahren nach Anspruch 1, wobei das Speichern der in dem EPF enthaltenen Programminformationen des Weiteren Folgendes umfasst:
Feststellen, ob eine Indexnummer (1, 2), die dem mindestens einen Programm entspricht, in der Indexkarte (21) existiert; und
Generieren einer neuen Indexnummer, die dem mindestens einen Programm entspricht, und Speichern der neuen Indexnummer in der Indexkarte (21), wenn die Indexnummer (1, 2), die dem mindestens einen Programm entspricht, nicht in der Indexkarte (21) existiert.

3. Verfahren nach Anspruch 1 oder 2, wobei die Indexkarte (21) durch Zuweisen einer ersten Indexnummer zu einem ersten Programm und einer zweiten Indexnummer zu einem zweiten Programm generiert wird.

4. Verfahren nach Anspruch 3, wobei die Indexkarte (21) nur einem einzigen Kanal entspricht.

5. Verfahren nach Anspruch 3, wobei die erste Indexnummer (1, 2) dem ersten Programm gemäß einem Titel oder Identifizierungscode des ersten Programms zugewiesen wird und die zweite Indexnummer (1, 2) dem zweiten Programm gemäß einem Titel oder Identifizierungscode des zweiten Programms zugewiesen wird.

6. Verfahren nach einem der vorangehenden Ansprüche, wobei das Speichern der Programminformationen mit Bezug auf eine Indexkarte (21) Folgendes umfasst:
Feststellen, ob eine Indexkarte (21), die einem Kanal entspricht, auf dem das mindestens eine Programm ausgestrahlt wird, existiert; und
Generieren einer neuen Indexkarte, die dem Kanal des mindestens einen Programms entspricht, wenn die Indexkarte (21), die dem Rundfunkkanal des mindestens einen Programms entspricht, nicht existiert.

7. Verfahren nach einem der vorangehenden Ansprüche, wobei:
die Programminformationen ein Ausstrahlungsdatum und eine Ausstrahlungsuhrzeit, einen Titel und Zusammenfassungsinformationen des mindestens einen Programms umfassen; und
das Speichern der Programminformationen das Speichern des Ausstrahlungsdatums und der Ausstrahlungsuhrzeit, des Titels und der Zusammenfassungsinformationen des mindestens einen Programms in der Datenbank, das der Indexnummer (1, 2) zugewiesen ist, umfasst.

8. Verfahren nach einem der vorangehenden Ansprüche, wobei die Indexkarte (21) in jedem Löschungszeitraum der EPF-Datenbank (31) aktualisiert wird oder mindestens ein Abschnitt der Indexkarte (21) automatisch gelöscht wird, wenn eine Speicherkapazität einer Einheit, die die EPF-Datenbank (31) speichert, unzureichend wird.

9. Verfahren nach Anspruch 8, wobei der Löschungszeitraum der Datenbank durch einen Benutzer eingestellt wird.

10. Verfahren nach Anspruch 1, wobei die Programminformationen Vorschaubilder des Programms umfassen.

11. Verfahren nach Anspruch 1, wobei das Anzeigen der Programminformationen des ausgewählten Programms das Anzeigen von Vorschaubildern für eine zuvor ausgestrahlte Episode des ausgewählten Programms umfasst.

12. Computerlesbares Aufzeichnungsmedium, auf dem ein Computerprogramm zum Ausführen eines Verfahrens zum Speichern und Anzeigen eines Elektronischen Programmführers (EPF) gemäß dem Verfahren von Anspruch 1 aufgezeichnet ist.

## Revendications

1. Procédé de stockage et d'affichage d'un Guide Électronique de Programmes (EPG), le procédé comprenant :
(a) la réception d'un guide EPG contenant des informations de programmes pour au moins un programme ;
(b) le stockage des informations de programmes dans l'une d'au moins une base de données (311, 312) contenue dans une base de données EPG (31) et respectivement affectée à un numéro d'index (1, 2), ledit numéro d'index (1, 2) étant respectivement affecté à un titre ou à un code dudit au moins un programme, et dans lequel ledit numéro d'index est contenu dans une table d'index (21) qui est respectivement affectée à un canal de diffusion ;
(c) la réception d'un guide EPG suivant contenant des informations de programmes supplémentaires concernant une diffusion ultérieure dudit au moins un programme et stockant en outre les informations de programmes supplémentaires contenues dans celui-ci conformément à l'étape (b) ;
(d) la réception d'un signal de sélection de programme pour sélectionner un programme à regarder ;
(e) la recherche d'informations de programmes concernant le programme sélectionné dans celle qui lui correspond de ladite au moins une base de données en utilisant le numéro d'index respectif (1, 2) affecté à un titre ou à un code du programme sélectionné ; et
(f) l'affichage des informations de programmes du programme sélectionné sur la base du résultat de recherche, y compris l'affichage d'informations de résumé concernant un épisode précédemment diffusé du programme sélectionné extrait de celle qui lui correspond d'au moins une base de données,
les informations de programmes comprenant le canal de diffusion, le titre et les informations de résumé du programme ; et
le stockage conformément à l'étape (b) étant conditionné au type du programme et comprenant :
la détermination du fait de savoir si l'au moins un programme appartient à un genre prédéterminé ; et
le stockage des informations de programmes dans ladite une de l'au moins une base de données (311, 312) seulement si l'au moins un programme appartient au genre prédéterminé.

2. Procédé selon la revendication 1, dans lequel le stockage des informations de programmes contenues dans le guide EPG comprend en outre :
la détermination du fait de savoir si un numéro d'index (1, 2) correspondant à l'au moins un programme existe dans la table d'index (21) ; et
la génération d'un nouveau numéro d'index correspondant à l'au moins un programme et le stockage du nouveau numéro d'index dans la table d'index (21) si le numéro d'index (1, 2) correspondant à l'au moins un programme n'existe pas dans la table d'index (21).

3. Procédé selon la revendication 1 ou 2, dans lequel la table d'index (21) est générée en affectant un premier numéro d'index à un premier programme et un second numéro d'index à un second programme.

4. Procédé selon la revendication 3, dans lequel la table d'index (21) correspond à un seul canal.

5. Procédé selon la revendication 3, dans lequel le premier numéro d'index (1, 2) est affecté au premier programme conformément à un titre ou à un code d'identification du premier programme, et le second numéro d'index (1, 2) est affecté au second programme conformément à un titre ou à un code d'identification du second programme.

6. Procédé selon l'une quelconque des revendications précédentes, dans lequel le tri des informations de programmes en référence à une table d'index (21) comprend :
la détermination du fait de savoir s'il existe une table d'index (21) correspondant à un canal sur lequel l'au moins un programme est diffusé ; et
la génération d'une nouvelle table d'index correspondant au canal de l'au moins un programme si la table d'index (21) correspondant au canal de diffusion de l'au moins un programme n'existe pas.

7. Procédé selon l'une quelconque des revendications précédentes, dans lequel :
les informations de programme comprennent une date et une heure de diffusion, un titre et des informations de résumé de l'au moins un programme ; et
le stockage des informations de programmes comprend le stockage de la date et de l'heure de diffusion, du titre et des informations de résumé de l'au moins un programme dans la base de données affectée au numéro d'index (1, 2).

8. Procédé selon l'une quelconque des revendications précédentes, dans lequel la table d'index (21) est mise à jour à chaque période d'effacement de la base de données EPG (31) ou dans lequel au moins une partie de la table d'index (21) est automatiquement supprimée lorsqu'une capacité de stockage d'une unité stockant la base de données EPG (31) devient insuffisante.

9. Procédé selon la revendication 8, dans lequel la période de suppression de la base de données est réglée par un utilisateur.

10. Procédé selon la revendication 1, dans lequel les informations de programmes comprennent des images de prévisualisation du programme.

11. Procédé selon la revendication 1, dans lequel l'affichage des informations de programmes du programme sélectionné comprend l'affichage d'images de prévisualisation pour un épisode précédemment diffusé du programme.

12. Support d'enregistrement lisible par ordinateur sur lequel est enregistré un programme informatique destiné à exécuter un procédé d'affichage d'un Guide Électronique de Programmes (EPG) conformément au procédé de la revendication 1.
